# EUROPEAN PATENT APPLICATION

(11) **EP 1 976 093 A2**
(43) Date of publication of application: **01.10.2008**
(21) Application number: 08001314.7
(22) Date of filing: 24.01.2008
(51) Int. Cl.: H02K 1/02, H02K 15/02, H02K 1/04

(54) **Commutator motor of a vacuum cleaner**

(30) Priority: 26.03.2007 JP 2007078121
(71) Applicant: Hitachi, Ltd., Chiyoda-ku Tokyo 100-8280 (JP)
(72) Inventor: Taniguchi, Tsukasa, Tokyo 100-8220 (JP); Ishikawa, Yoshihisa, Tokyo 100-8220 (JP); Abe, Teruyoshi, Tokyo 100-8220 (JP)
(74) Representative: Beetz & Partner

(57) **Abstract**

An efficient and high-performance commutator motor in which both torque enhancement and iron loss reduction are achieved is provided by ensuring a sufficient area occupied by field windings wound on main poles and further suppressing the influence of armature counteractive magnetic flux and reducing pulsating torque. The commutator motor includes a stator (1) and an armature (2). The stator (1) includes a stator iron core (3) having main poles (8) slots (41) and field windings (5,6) disposed in the slots (41). The armature (2) includes an armature iron core (7) having slots (42), teeth (43) and armature windings (10) wound in the slots (42). The stator and armature iron cores (3,7) are formed of laminated steel sheets. Both iron cores (3,7) are formed by etching process. Multiple through holes (B) are formed in the main poles (8) opposed to the air gap (15) positioned on the forward side in the direction of armature rotation (R) by etching process.

## Description

### BACKGROUND OF THE INVENTION

### 1. FIELD OF THE INVENTION

The present invention relates to a commutator motor and an electric vacuum cleaner using it.

### 2. DESCRIPTION OF RELATED ART

For electric vacuum cleaners and electric power tools, compact and lightweight motors are demanded in terms of ease of operation. To reduce the size and weight of a motor, various means are adopted. Examples of such means include a method of setting a high rotational speed, a method of setting the magnetic flux density of an iron core to a relatively high value, and the like, as described in Non-patent Document "Enhancement of Power Density of Universal Motor for Cleaner, " Reference RM-96-28 for Technical Meeting on Rotating Machinery, Institute of Electrical Engineers of Japan.

Aside from size and weight reduction, suction force is also one of performances required from electric vacuum cleaners. Suction force greatly depends on the output of an electric blower. With respect to household electric vacuum cleaners, there is limitation on power that can be supplied to an electric blower. Therefore, increase in motor output by enhancing the efficiency of a commutator motor is a key to the enhancement of suction force, and it is strongly demanded to reduce the loss of commutator motors.

For example, a technique for reducing the iron loss of amotor is disclosed in Japanese PatentLaid-OpenNo. 2004-201428 This technique is such that an increase of iron loss according to the stress generated by the press fit process is prevented when a stator iron core is press fit into a housing The generation s of stress is suppressed to prevent increase in iron loss by forming an air gap between a stator iron core and a housing.

Japanese Patent Laid-Open No. 2000-197320 and the like describe that a magnetic material is processed by etching process.

With respect to commutator motors, meanwhile, attempts have been made to reduce pulsating torque to weaken mechanical vibration and thereby enhance the rectifying performance of motors to lengthen the lives of brushes.

Techniques for reducing pulsating torque are disclosed in Japanese Patent Laid-Open No. 07-298592 and Japanese Patent Laid-Open No. 2003-153471 . Hereafter, description will be given to these related arts.

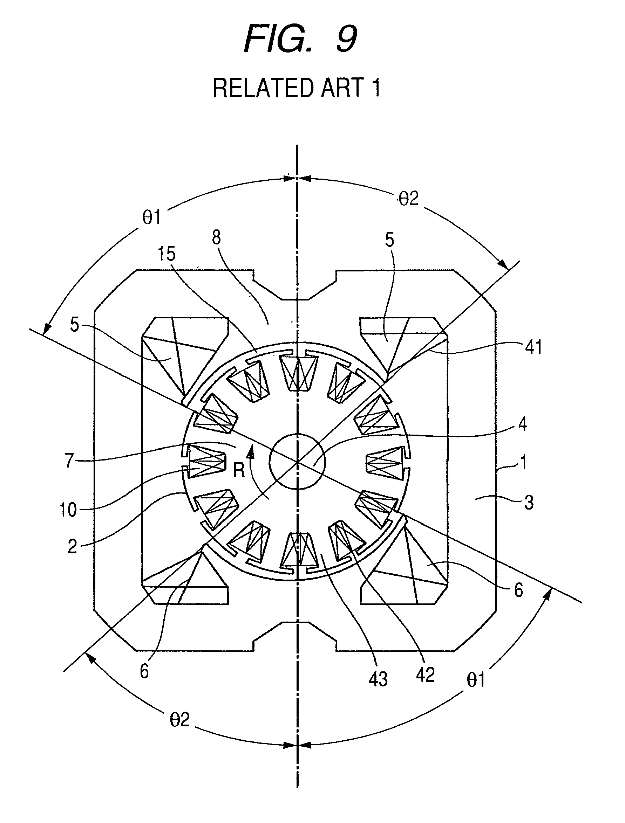

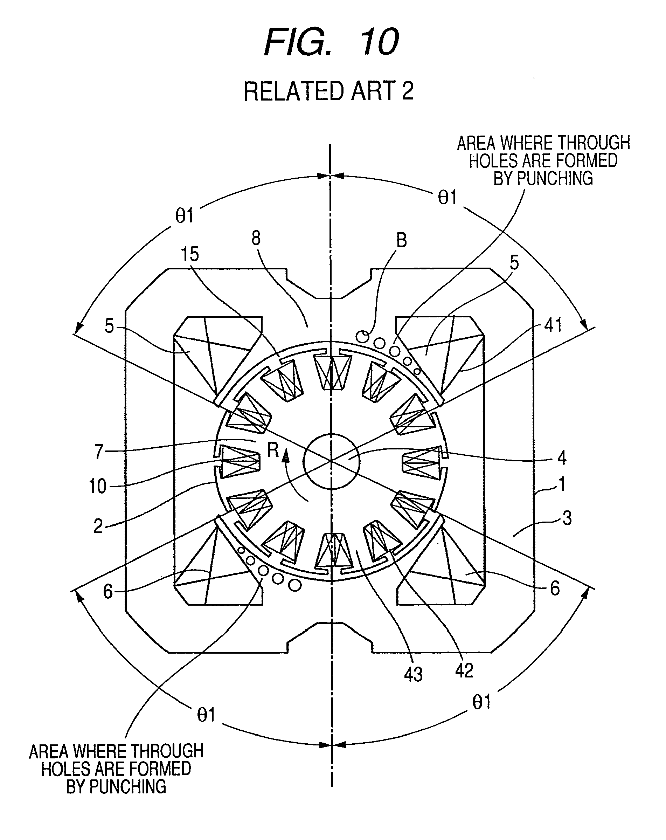

FIG. 9 illustrates the cross-sectional configurations of commutator motors in the related art 1), and FIG. 10 illustrates another related art 2. Reference numeral 1 denotes stator; 2 denotes armature; 3 denotes stator iron core; 4 denotes shaft; 5 and 6 denote field winding; 7 denotes armature iron core; 8 denotes main pole; and 10 denotes armature winding.

Reference numeral 41 denotes stator slot; 42 denotes armature slot; and 43 denotes teeth.

Torque is generated by magnetic interaction between main magnetic flux from the field windings 5, 6 wound on the stator iron core 3 in a concentrated manner and armature counteractive magnetic flux from the armature winding 10 wound on the armature iron core 7.

As shown in FIG. 9, according to the related art 1, an end of a main pole 8 of an iron core positioned on the forward side of the main pole in the direction of armature rotation is made shorter than that on the backward side of the armature 2. Thus, the iron core is asymmetrically constructed with respect to the central axis of the commutator motor. That is, the right aperture (θ2) and the left aperture (θ1) of the main poles are made different from each other with respect to the central axis so that θ2 < θ1. Thus, the influence of counteractive magnetic flux from the armature 2 is suppressed by asymmetrically constructing the main poles for the reduction of pulsating torque.

To achieve the above asymmetric iron core shape, the area occupied by the field windings 5, 6 is different between the left and right stator slots 41 of the main poles 8. Therefore, with respect to the area occupied by the field winding 5, naturally, that in the left stator slot is larger than that in the right stator slot. For this reason, some measure is taken when a wire is wound on a main pole in a concentrated manner. If a wire is wound in accordance with the left winding occupied area, the winding gets out of shape from the right side. To prevent this, a wire is inevitably wound in accordance with the right winding occupied area that is smaller. As a result, a sufficient number of wire turns cannot be ensured, and this leads to reduced torque.

In FIG. 10, according to the related art 2, the main poles 8 are not in asymmetric iron core shape unlike the related art 1. In this example, a sufficient occupied area of the field windings 5, 6 is ensured.

Through holes B are formed in the ends of main poles in positions corresponding to the forward side of the armature 2 relative to the main poles by punching process. The magnetic reluctance of the iron core is thereby manipulated to achieve a magnetic circuit equivalent to the asymmetric iron core configuration in the above related art 1. This makes it possible to make the areas occupied by the field windings 5, 6 equal on the left and right sides of the main poles 8. Therefore, the field windings 5, 6 can be wound in a concentrated manner without causing their portion at the ends of the main poles 8 to get out of shape. Thus, the problem of reduced torque associated with the related art 1 is solved.

However, both the related art 1 and the related art 2 involve another problem. The main poles 8 of the stator iron core 3 and their ends and the slots and teeth in the armature iron core are formed by machining using punching process. Plastic deformation in a electromagnetic steel sheet due to punching process degrades magnetic characteristics and this leads to increased iron loss.

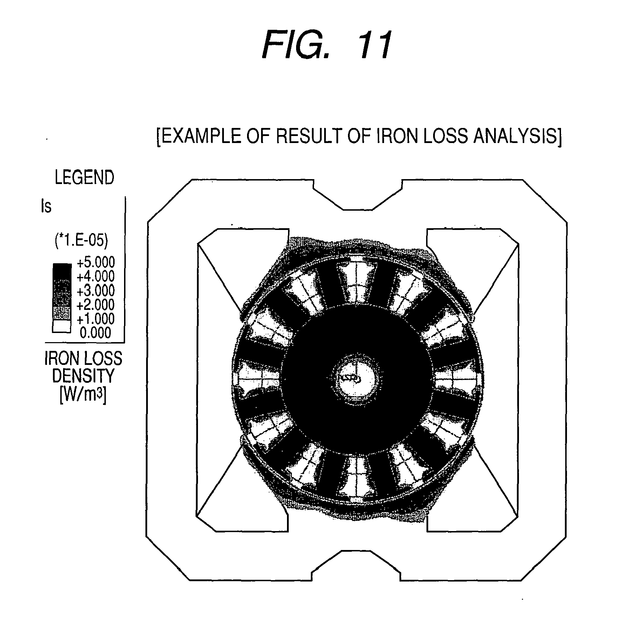

FIG. 11 is a distribution map explaining an example of the result of an analysis on iron loss in a commutator motor. Specifically, the drawing indicates the distribution of iron loss density in a commonly used commutator motor, and in an area indicated by black, much iron loss is produced.

That is, most of iron loss is consumed at (1) the armature iron core, (2) the main poles of the stator iron core, and (3) the ends of the main poles of the stator iron core. Especially, much iron loss is produced in the main poles 8 opposed to the air gap 15 and the superficial portion of the armature iron core 7.

This status of iron loss production is a phenomenon unique to commutator motors under high-speed rotation, especially, those used as a driving source for an electric vacuum cleaner. It is one of phenomena that are not observed in any other motor.

In the related art 1 and the related art 2, the main poles 8, slots, and teeth formed by punching process are provided in areas high in iron loss density, in other words, areas most susceptible to iron loss. In the related art 2, the through holes B are provided in addition to them. Needless to add, therefore, iron loss is increased in plastic deformation areas in a electromagnetic steel sheet introduced as the result of punching process.

With respect to a punching process, the disorder, such as burr and shear drop in a cut area, becomes a big problem as a steel sheet to be processed is more reduced in thickness. In conjunction with this, hysteresis loss tends to be increased.

In punching process , one of stamping methods using a metal mold, a work hardening layer or a plastic deformation layer designated as burr or shear drop (hereafter, referred to as "burr or the like") is formed in proximity to a cut area. Residual strain or residual stress is also produced there. Residual stress produced during punching process destroys the ordered orientation of molecular magnets, that is, destroys magnetic domains and significantly increases iron loss. As a result, an annealing process is required to remove residual stress. This annealing process leads to further increase in the manufacturing cost of an iron core.

Burr or the like is one of plastic deformation layers, and it is sharply protruded from the direction of the plane of a steel sheet to the direction of space along a cut area. Therefore, it can break an insulating film formed on the surface of the electromagnetic steel sheet and destroy insulation between laminated steel sheets.

When these steel sheets are laminated, an unwanted gap is formed between laminated steel sheets by burr or the like. Therefore, increase in laminated iron core density is hindered, and as a result, the magnetic flux density is reduced. Reduction in magnetic flux density prevents reduction of the size and weight of the commutator motor.

To crush burr or the like to enhance laminated iron core density, an iron core obtained by laminating electromagnetic steel sheets may be compressed in the direction of sheet thickness sometimes. In this case, residual stress is increased by compression under pressure, and this increases iron loss. Further, a problem of insulation breakdown due to burr or the like remains unsolved.

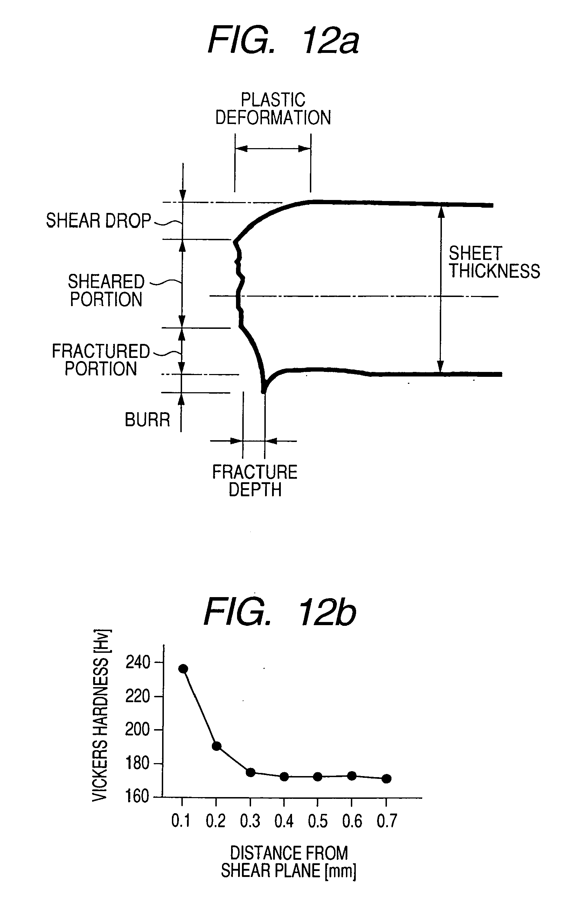

FIG. 12a illustrates a typical shape of a cross section processed by punching process. FIG. 12b is a graph showing the relationship between hardness of the steel sheet and the distance from the shear plane.

When a silicon steel sheet is processed by punching process, the area in proximity to the processed cross section is noticeably deformed by shearing stress produced during plastic working and a burr and a shear drop of 0 to 100 µm or so are formed.

Also, with respect to the dimensional accuracy in the direction of the plane of the silicon steel sheet, punching process is limited by the dimensional accuracy of a metal mold. Usually, it is sheared with a clearance of approximately 5% of the sheet thickness of the silicon steel sheet; therefore, the dimensional accuracy in the direction of the plane of the silicon steel sheet is degraded. Punching process also involves other problems. In mass production, for example, a metal mold is worn and this degrades accuracy with time. The more a silicon steel sheet is thinned, the more it is difficult to process by punching process.
Thus, when a silicon steel sheet is used as a electromagnetic steel sheet for use in an efficient and high-performance commutator motor, those 0. 50 mm and 0.35 mm in sheet thickness have been mainly used and thickness reduction has not been promoted for long.

### SUMMARY OF THE INVENTION

An object of the invention is to obtain an efficient and high-performance commutator motor wherein reduction in the torque of the commutator motor is prevented and further pulsating torque is reduced, and unnecessary increase in iron loss due to punching process is prevented in at least the main poles of a stator iron core opposed to an air gap and its through holes and armature slots and teeth positioned in the peripheral area of an armature iron core .

Another object of the invention is to eventually enhance suction force, which is the basic performance of an electric vacuum cleaner.

In a commutator motor, its teeth and slots are formed by etching process of a electromagnetic steel sheet.

According to the invention, it is possible to provide an efficient and high-performance commutator motor in which unnecessary increase in iron loss due to punching process is prevented.

### BRIEF DESCRIPTION OF THE DRAWINGS

FIG. 1 is a partially cutout half sectional view of an electric blower for electric vacuum cleaners, illustrating an embodiment of the invention.
FIG. 2 is a sectional view of a commutator motor of this invention, taken along line II-II of FIG. 1. FIG. 3 is a comparative graph showing the relationship of the shaft torque and the pulsating torque of commutator motors of the invention.
FIG. 4 is a graph showing the enlarged portion A in FIG. 7.
FIG. 5 is a graph showing the relationship between the thickness of a electromagnetic steel sheet and iron loss.
FIG. 6 is a graph showing the relationship between the silicon content of a silicon steel sheet and iron loss.
FIG. 7a is a schematic view of a typical cross-sectional shape obtained by etching process.
FIG. 7b is a graph showing the relationship between hardness of the steel sheet and a distance from the shear plane.
FIG. 8a, FIG. 8b, FIG. 8c and FIG. 8d are schematic view of cross sectional shape of four modifications processed by etching process.
FIG. 9 is a sectional view of a commutator motor in the related art 1, equivalent to FIG. 2 of the embodiment.
FIG. 10 is a sectional view of a commutator motor in the related art 2, equivalent to FIG. 2.
FIG. 11 is a distribution map explaining the iron loss density distribution of a commutator motor.
FIG. 12a is a schematic view illustrating a typical cross-sectional shape obtained by punching process and a state of work hardening.
FIG. 12b is a graph showing the relationship between hardness of the steel sheet and a distance from the shear plane.

### DETAILED DESCRIPTION OF THE PREFERRED EMBODIMENTS

### (Basic Structure of the Motor)

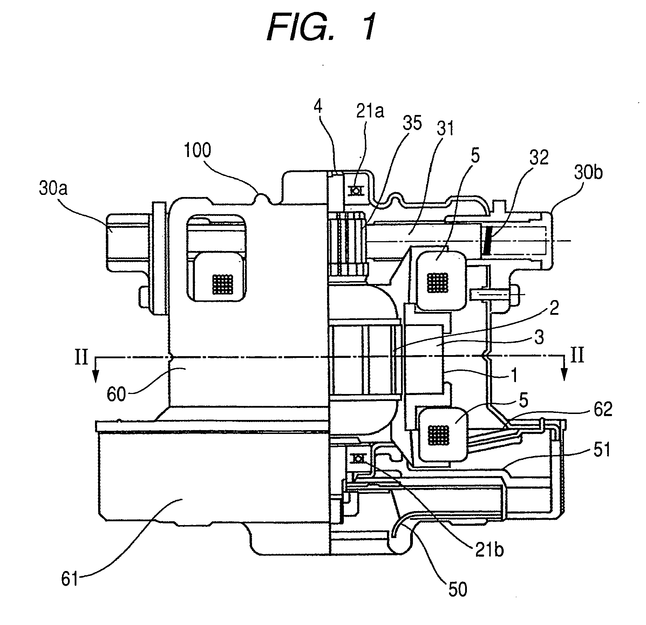

Hereafter, description will be given to an embodiment of the invention with reference to FIG. 1 to FIG. 8.

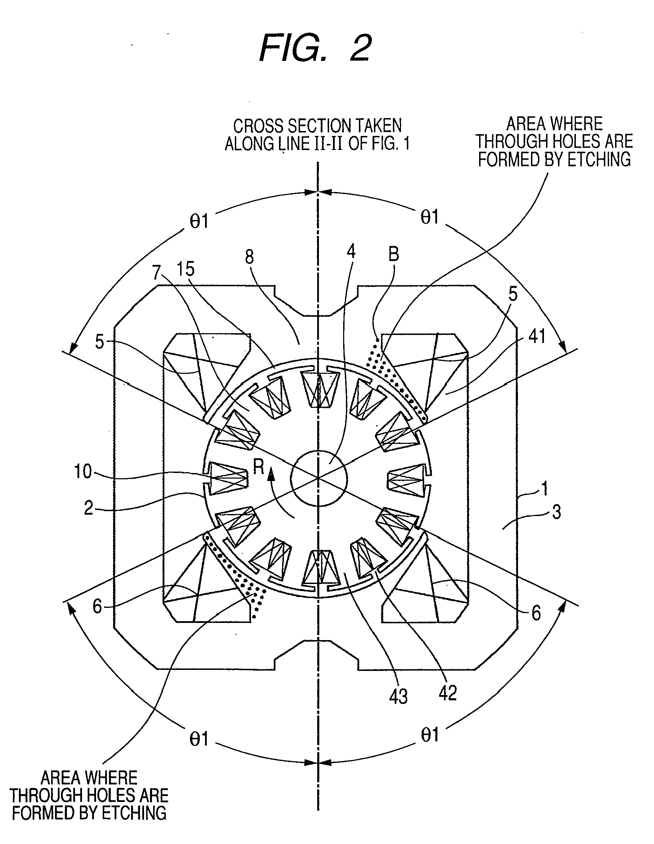

FIG. 1 illustrates the configuration of an electric blower of the invention. FIG. 2 is a sectional view taken along line II-II of FIG. 1. The motor part of the electric blower 100 is constructed of an armature 2 and a stator 1 placed in a housing 60 and an end bracket 62. A diffuser 51 and a fan casing 61 are so provided that a fan 50 provided at an end of the output shaft of the motor is encircled with them.

The stator 1 of the motor is constructed of a stator iron core 3 and field windings 5, 6 placed in the housing 60. Main magnetic flux is generated by passing a current through the field windings 5, 6.

In FIG. 2, the armature 2, disposed with an air gap 15 between it and the stator iron core 3, has a shaft 4, and is supported in bearings 21a, 21b provided at the centers of the axes of the housing 60 and the end bracket 62. The shaft 4 is provided with a commutator 35 and an armature iron core 7. An armature winding 10 is wound in the slots in the armature iron core 7, and both ends of each coil are connected to respective commutator pieces constructing the commutator 35.

When alternating-current voltage is applied to between the terminals of the commutator motor, a current flows to a carbon brush 31 through either field winding 5 of the stator 1. Power is given and received to and from the armature 2 through another carbon brush (not shown) disposed opposite thereto.

Energization of the commutator 35 by mechanical sliding contact is carried out as follows so that power can be stably fed even under a high-speed rotation condition: the carbon brushes are biased against the commutator 35 by a brush pressing spring 32; and a current associated with a rectification phenomenon is passed through the armature windings 10. As a result, continuous torque is generated and turning force for the fan is obtained.

In FIG. 2, the main poles 8 of the stator iron core 3 is so constructed that the following is implemented: the left and right aperture angles (θ1) with respect to the center of the motor are identical with each other; and the area occupied by the wound field windings 5, 6 is also identical on the left and the right of the stator slots 41. At least the main poles 8 of the stator iron core opposed to the air gap 15 and their ends and the armature slots 42 and the teeth 43 of the armature iron core 7 are formed by etching process. Further, multiple through holes B formed by etching process are disposed in the main poles 8 on the forward side in the direction (R) of armature rotation.

The reason why the area occupied by winding in the stator slots 41 is made identical on the left and the right is to solve the above problem of reduced torque associated with the related art 1. This means that a sufficient area occupied by field windings wound on the main poles of the stator in a concentrated manner can be ensured both on the left side and on the right side.

The reason why the multiple through holes B formed by etching process are dispersed in the main poles 8 on the forward side in the direction (R) of armature 2 rotation is to solve the problem associated with the related art 2. That is, the reason is to solve the problem of increased iron loss due to punching process.

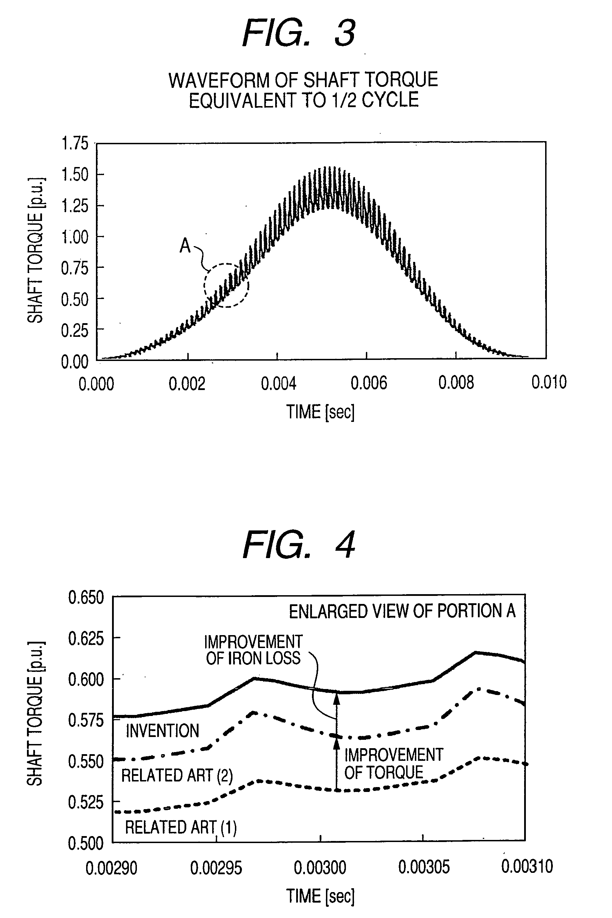

FIG. 3 is a comparative graph of the shaft torque and the pulsating torque of commutator motors between the embodiment of this invention and in related art 1 and 2. FIG. 4 is a graph showing the enlarged portion A of FIG. 3. Description will be given to the comparison of a commutator motor of the invention with those in the related art 1 and the related art 2 for shaft torque.

In FIG. 3 and FIG. 4, the motor torque, output torque corresponding to an alternating current was obtained, and this takes a waveform of a cycle twice the frequency of 50Hz as illustrated in the drawing. The beard of torque represents pulsating torque, and it is known that pulsating torque is produced by interaction between variation in magnetic reluctance between armature slots and main poles and rectifying characteristic.

FIG. 4 illustrates the enlarged waveform of shaft torque of 0.5 p.u. (1 p.u. is rated torque) as enlarged view of portion A.

With respect to pulsating torque, the related art 1 and related art 2 and the invention were equal to each other. On the other hand, as to the magnitude of shaft torque, it was verified that the invention > related art 2 > related art 1.

This is mainly because in the related art 2, a sufficient number of wire turns could be ensured and torque improvement was achieved as compared with the related art 1.

Further, the following was verified: in the commutator motor of the invention, increase in iron loss due to plastic deformation in the iron core arising from punching process was suppressed as compared with the related art 2, and the torque value was increased.

### (Etching process)

The commutator motor in this embodiment includes: the stator 1 for generating field magnetic flux and the armature 2 for generating magnetic flux substantially perpendicular to the field magnetic flux; the stator iron core 3 having the main poles 8 and the stator slot 41; and the field windings 5, 6 disposed in the stator slots 41.

The stator iron core 3 (hereafter, referred to as "iron core" sometimes) is formed of laminated electromagnetic steel sheets. The slots 41 in the steel sheets are formed by etching process, preferably, by photo-etching(wet etching) process. At this time, the thickness of the steel sheet is 0.08 to 0.30 mm. The armature iron core 7 (hereafter, referred to as "iron core" sometimes) is also formed of laminated steel sheets. The teeth 43 and the armature slots 42 in the steel sheets are formed by etching process, preferably, by photo-etching process. At this time, the thickness of the steel sheet is 0.08 to 0.30 mm.

The through holes B provided in the main poles 8 of the stator iron core 3 on the forward side in the direction of armature 2 rotation are formed by etching process, preferably, by photo-etching process.

Needless to add, it is desirable to process the entire stator iron core by etching process in terms of magnetic characteristic and the efficiency of the entire manufacturing process.

As with the stator iron core 3, it is also desirable to form the armature iron core 7 by processing a silicon steel sheet, 0.08 to 0.30 mm in thickness, by etching process in terms of the improvement of magnetic characteristic. More specific description will be given. Processing the stator iron core 3 or the armature iron core 7 by punching process destroys the regular crystalline disposition in a steel sheet and this increases hysteresis loss. Processing the stator iron core 3 or the armature iron core 7 by etching process makes it possible to prevent the destruction of the regular crystalline disposition and increase in hysteresis loss.

Hereafter, detailed description will be given to an advantage of an iron core made by etching process method according to the invention and a method for applying it.

Etching process can solve the problem accompanying in the punching process. Etching process makes it possible to suppress hysteresis loss and reduce eddy current loss. With respect to commutator motors, processing a stator iron core and an armature iron core by etching process brings the following advantages: iron loss can be reduced and the efficiency of a commutator motor is enhanced; the aerodynamic performance of an electric blower is improved; and eventually, the suction force of an electric vacuum cleaner can be enhanced.

Unlike punching process, etching process is free from the influence of degradation in magnetic characteristic due to plastic deformation. Also, when multiple through holes B are introduced, a manipulation can be effectively carried out to increase magnetic reluctance. Therefore, it is possible to effectively suppress the influence of counteractive magnetic flux from an armature and ensure a sufficient winding occupied area. As a result, it is possible to obtain an efficient and high-performance commutator motor wherein torque reduction is prevented and further pulsating torque is reduced.

One of typical etching process methods is photo-etching process.

Concrete description about the etching process will be given based on the following embodiment:

### (Core density and composition of steel sheet)

In the embodiment, the laminated iron core density of the iron core is 90.0 to 99.9%. It is preferably 93.0 to 99.9%. The laminated iron core density is defined as laminated iron core density (%) = steel sheet thickness (mm) x number of iron core pieces (pieces) ÷ iron core height (mm) x 100.

It is not always impossible to enhance a laminated iron core density, and this is done by compressing mechanically laminated iron core pieces. In this case, however, iron loss is increased and this is undesirable. In the description of this embodiment, a case where a laminated iron core density can be enhanced without providing such a special process for the enhancement of laminated iron core density will be taken as an example.

In this case, the thickness of the steel sheet is 0.08 to 0. 30 mm; the number of iron core pieces is 20 to 1000 (pieces) ; and the iron core height is 5 to 200 mm. The laminated iron core density (%) of the iron core is derived from these conditions.

The composition of the steel sheet is as follows: the C content is 0.001 to 0.060% by weight; Mn is 0.1 to 0.6% by weight; P is 0.03% by weight or less; S is 0.03% by weight or less; Cr is 0.1% by weight or less; Al is 0.8% by weight or less; Si is 0.5 to 7.0% by weight; Cu is 0.01 to 0.20% by weight; and the remnant is composed of unavoidable impurities and Fe. The unavoidable impurities include gas components of oxygen and nitrogen and the like.

The composition of the steel sheet is preferably as follows: the C content is 0.002 to 0.020% by weight; Mn is 0.1 to 0.3% by weight; P is 0.02% by weight or less; S is 0.02% by weight or less; Cr is 0.05% by weight or less; Al is 0.5% by weight or less; Si is 0.8 to 6.5% by weight; Cu is 0.01 to 0.1% by weight; and the remnant is composed of impurities and Fe. The steel sheet is a silicon steel sheet as a so-called electromagnetic steel sheet containing crystal grains.

In determining the composition of the silicon steel sheet, the contents of Si and Al are important, especially, in terms of iron loss reduction. When Al/Si is specified from this viewpoint, it is desirable that this ratio should be 0.01 to 0.60. It is more desirable that the ratio should be 0.01 to 0.20.

The content of silicon used in the silicon steel sheet can be differently used depending on the type of the commutator motor. That is, in some commutator motor, 0.8 to 2. 0% of silicon by weight may be used, and in another, 4.5 to 6.5% of silicon by weight may be used.

Reducing the silicon content enhances the magnetic flux density of a silicon steel sheet. In case of this embodiment, it can be set to 1.8 to 2.2T.

When the silicon content is low, ease of rolling is enhanced and a sheet thickness can be reduced. When a sheet thickness is reduced, iron loss is also reduced. When the silicon content is high, reduction in ease of rolling can be solved by exercising ingenuity, for example, adding silicon after a rolling process, and thus iron loss is reduced.

With respect to the distribution of silicon contained in a silicon steel sheet, it may be substantially evenly dispersed in the direction of the thickness of the silicon steel sheet. Or, its content inside a silicon steel sheet may be made higher than that in the superficial portion in the direction of the thickness of the silicon steel sheet so that the content of silicon is partly high.

### (The coating of steel sheet)

The iron core has an insulating film, 0.01 to 0.2 µm in thickness, between a steel sheet and a steel sheet laminated. The thickness of this insulating film can be differently used depending on the type of a commutator motor. In some commutator motor, it is 0.1 to 0.2 µm, preferably, 0.12 to 0.18 µm, and in another, it is 0.01 to 0.05 µm, preferably, 0.02 to 0.04 µm.

When the thickness of the insulating film is 0.1 to 0.2 µm, it is desirable to use an organic or inorganic film for the insulating film. Possible materials of the insulating film include organic materials, inorganic material, and hybrid materials, or mixtures of them.

When the thickness of the insulating film is 0.01 to 0.05 µm, it is desirable that the insulating film should be an oxide film. It is especially desirable that it should be a ferrous oxide film. In this case, accompanying with reducing the thickness of the metal sheet, the thickness of the insulating film can be reduced.

When the thickness or ingredients of a conventional insulating film for a electromagnetic steel sheet are adjusted, the following measure used to be taken so as to maintain insulation property even after punching process and enhance ease of punching process itself: consideration used to be also given to properties other than insulation property, including lubricating property, the adhesion of a steel sheet, heat resistance against annealing after punching process, and welding property utilized when laminated electromagnetic steel sheets are welded together to form an iron core. At this time, a thickness of 0. 3 µm or so used to be required for the insulating film.

On the contrary, when the etching process is applied to the small thickness silicon steel sheet is reduced, the thickness of the insulating film can be reduced as well.

In another point of view on the coating process, with respect to the thinned silicon steel sheet described in relationship to this embodiment, it was found that the insulating film need be reduced in thickness.

The reason for this is as follows: when an insulating filmhaving the same thickness of that of conventional insulating films is used, the silicon steel sheet is thinned; the volume ratio of the insulating film is relatively increased as compared with the volume ratio of the silicon steel sheet; and thus there is a possibility that the magnetic flux density is reduced.

With the thinned silicon steel sheet described in relationship to this embodiment, as mentioned above, the insulating film can be reduced in thickness.

When a electromagnetic steel sheet is thinned, in general, it is required to increase the thickness of the insulating film to protect the steel sheet. In this embodiment, unlike this point of view, the insulating film need not be thickened even when the electromagnetic steel sheet is thinned. On the contrary, it can be thinned together with the electromagnetic steel sheet. Therefore, the enhancement of the laminated iron core density is also achieved.

### (Silicon steel sheet)

There is the following relationship between rotational speed and iron loss: as a rotational speed becomes higher, the alternating frequency of magnetic flux becomes higher and thus iron loss is increased. Commutator motors high in rotational speed tend to be increased in iron loss as compared with commutator motors low in rotational speed. When the silicon content of a silicon steel sheet is considered, it is required to take this into account.

Silicon contained in a silicon steel sheet may be evenly added to the electromagnetic steel sheet by a solution process. Or, it may be added locally, especially, to the superficial portion of the electromagnetic steel sheet by such a method as surface modification, ion implantation, or CVD (Chemical (Vapor Deposition).

The electromagnetic steel sheet described in relationship to this embodiment is on the assumption that it is used in an iron core having teeth and slots, forming the armature and the stator of a commutator motor. It is 0.08 to 0.30 mm in thickness, and is so constructed that teeth and slots can be formed there by etching process.

Etching process on a electromagnetic steel sheet, 50 to 200 cm in width, is carried out by: applying resist to the steel sheet, exposing tooth shape and slot shape to light, developing the shapes, removing the resist based on the shapes, treating the steel sheet in etchant, and thereafter, removing the remaining resist.

In this embodiment, a silicon steel sheet low in iron loss is used and further the following are taken into account to reduce the iron loss of an iron core: adjustment of the silicon content in consideration of rolling as well; reduction in the thickness of a sheet thickness in consideration of rolling of the silicon steel sheet as well; application of etching process to form the silicon steel sheet into the shape of iron core; reduction of the iron loss of each silicon steel sheet constructing a laminated iron core; and the insulating films formed between a silicon steel sheet and a silicon steel sheet.

### (Feature of etching process on steel sheet)

In this embodiment, an iron core is formed without conducting this punching process. Therefore, a plastic deformation layer is hardly formed, and residual strain or residual stress is not produced. Therefore, the orientation of crystal grains is hardly disrupted, and it is possible to prevent damage to the orientation of molecular magnets, that is, the orientation of magnetic domains and to prevent degradation in hysteresis characteristic, one of magnetic characteristics.

The iron core is formed by laminating processed silicon steel sheets. The magnetic characteristic of the iron core can be further enhanced by suppressing the production of the residual strain and the residual stress in the silicon steel sheets.

Therefore, the commutator motor in this embodiment makes it possible to reduce iron loss, increase output, and reduce its size and weight. The electromagnetic steel sheet used in this commutator motor is favorable and substantially free from burr or the like in its edge portions.

In the iron core described in relationship to this embodiment, substantially no burr or the like is produced; therefore, compression under pressure need not be used and laminated iron core density can be enhanced. Further, insulation breakdown is not caused. Therefore, iron loss reduction can also be achieved.

For the silicon steel sheet as a electromagnetic steel sheet used in the iron core, a silicon content of 6.5% by weight theoretically produces the lowest iron loss. However, increase in silicon content significantly degrades ease of rolling and ease of punching process. For this reason, even though iron loss is slightly high, the main stream of the silicon content of silicon steel sheets have been approximately 3.0%-by weight with ease of rolling and ease of punching process taken into account.

In case of the silicon steel sheet described in relationship to this embodiment, the sheet thickness can be reduced to 0.3 mm or less because of the reduced generation of eddy current in this case. Even when the silicon content is set to 2.0% by weight or less, its iron loss is low.

To manufacture a silicon steel sheet whose sheet thickness is reduced to 0.3 mm or less, a special process for rolling, annealing, or the like is conventionally required. The silicon steel sheet described in relationship to this embodiment does not require such a special process; therefore, a cost of the manufacture of a thinned silicon steel sheet can also be reduced. The manufacture of the iron core does not require punching process; therefore, the manufacturing cost can be further reduced.

Aside from the silicon steel sheet, one of the dominant materials of iron cores, there are known a very expensive amorphous material as a very thin electromagnetic material used in special applications in a limited way. The amorphous material involves a special process in which molten metal is quickly solidified and they are manufactured as foil bodies. Therefore, the following is believed: it is possible to manufacture a very small quantity of the amorphous material as thin as approximately 0.05 mm or less and as narrow as approximately 300 mm; but it is impossible to manufacture a material having a larger sheet thickness or sheet width on the industrial scale.

As mentioned above, the amorphous material is hard and fragile and too thin. Therefore, it cannot be subjected to punching process and is low in magnetic flux density because of limitation due to its chemical components. For these and other reasons, it cannot become a dominant material of iron cores.

Unlike the amorphous material, the electromagnetic steel sheet described in relationship to this embodiment contains crystal grains.

The electromagnetic steel sheet in this embodiment makes it possible to simultaneously achieve the following: thickness reduction advantageous to iron loss reduction; reduction in strain; the enhancement of output, the enhancement of dimensional accuracy advantageous to size and weight reduction; and the enhancement of iron core lamination density advantageous to the enhancement of magnetic flux density.

According to this embodiment, that is, it is possible to provide an iron core that makes it possible to reduce iron loss, enhance output, and reduce size and weight.

### (Sheet thickness and iron loss)

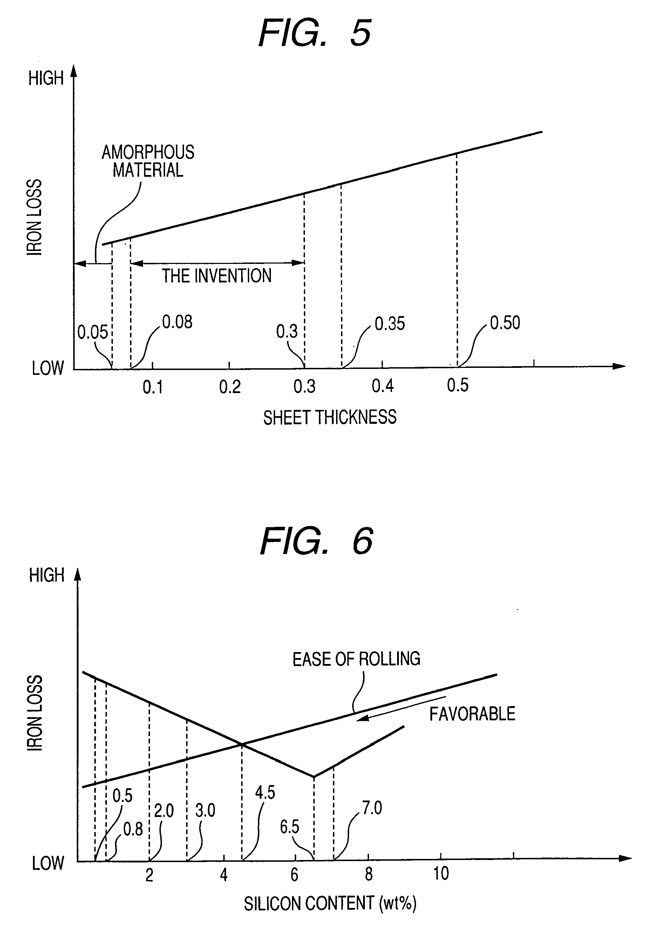

FIG. 5 illustrates the relationship between the sheet thickness and the iron loss of electromagnetic steel sheets.

It is apparent from FIG. 5 that there is the following relationship between sheet thickness and iron loss: iron loss is increased with increase in sheet thickness.

In consideration of ease of rolling and ease of punching process, two different sheet thicknesses, 0.50 mm and 0.35 mm, has been commonly used for silicon steel sheets.

For these silicon steel sheets of two different sheet thicknesses widely used in the manufacture of iron cores, rolling and annealing are required to reduce iron loss. To further reduce a sheet thickness, it is required to repeat rolling and annealing though the repeat count is different depending on the shape and size of iron cores to be processed. For commonly used silicon steel sheets, as mentioned above, it is required to add a special process, such as rolling and annealing, to the manufacturing process to reduce their thickness. This increases the cost of manufacturing.

The iron core described in relationship to this embodiment makes it possible to reduce the cost of manufacturing and solve problems associated with the processing of iron cores, and thus enables mass production on the industrial scale.

This embodiment uses a silicon steel sheet 0.08 to 0.30 mm in sheet thickness. It is preferable that a silicon steel sheet 0.1 to 0.2 mm in sheet thickness should be used and etching process should be used to form the shape of the iron core.

FIG. 5 also indicates the range of the sheet thickness of amorphous material for the purpose of reference. The amorphous material involves a special process to manufacture it as a foil body by quickly solidifying molten metal. Therefore, it is suitable for the manufacture of so thin a sheet material as approximately 0.05 mm or less. A larger sheet thickness makes it difficult to quickly cool the material, and such a thick material is difficult to manufacture. With respect to sheet width as well, only so narrow a material as 300 mm or so can be manufactured. This, together with the necessity for a special manufacturing process, significantly increases the cost of manufacturing.

With respect to magnetic characteristic, the amorphous material is low in iron loss but has a drawback of low magnetic flux density. This is because it is quickly cooled and solidified and this limits its chemical components.

This embodiment does not use such an amorphous material but uses a silicon steel sheet containing crystal grains.

Description will be given to a typical manufacturing process for silicon steel sheets.

A material that can become a electromagnetic steel sheet is processed to make steel. For example, a steel sheet material having the following composition is used: the C content is 0.005% by weight; Mn is 0.2% by weight; P is 0.02% by weight; S is 0 . 02% by weight; Cr is 0 . 03% by weight; Al is 0 . 03 o by weight; Si is 2.0% by weight; Cu is 0.01% by weight; and the remnant is Fe and some amount of impurities.

This steel sheet material is subjected to continuous casting, hot rolling, continuous annealing, pickling, cold rolling, and continuous annealing. A silicon steel sheet, 50 to 200 cm in sheet width, especially, 50 cm in sheet width in this example, and 0.2 mm in sheet thickness, is thereby manufactured.

To reduce iron loss, further, silicon of 4.5 to 6.5% by weight may be formed on the surface of the manufactured silicon steel sheet.

Thereafter, an insulating film of organic resin, 0.1 µm in thickness, is coated to manufacture the silicon steel sheet.

An oxide film, 0.01 to 0. 05 µm in thickness, may be formed without use of a special insulating film coating process in some cases.

The insulating film coating process, described here, is preferably carried out after an etching process process when the iron core is manufactured.

The silicon steel sheet is formed in the shape of flat plate, coil, or roll.

### (Detail of etching process)

Description will be given to a typical manufacturing process for iron cores.

The manufactured silicon steel sheet is subjected to pretreatment, and resist is applied to it. Using a mask corresponding to tooth shape and slot shape, the resist is exposed to light and developed. The resist is removed based on these shapes. Further, the work piece is treated with etchant. After the treatment with etchant, the remaining resist is removed to manufacture a silicon steel sheet having desired tooth shape and slot shape. For example, photo-etching process is effective for this manufacture, and a method of precisely forming a micro-pore using a metal mask is also effective.

More than one thus manufactured silicon steel sheet having desired tooth shape and slot shape and further an iron core shape is laminated, and the laminated silicon steel sheets are fixed by welding or the like to manufacture the iron core. With respect to this welding, a method, such as fiber laser, in which heat input is low is preferable.

A rotor iron core and a stator iron core may be simultaneously obtained from a silicon steel sheet formed in the shape of flat plate, coil, or roll, or multiple iron cores different in shape may be simultaneously obtained.

Use of etching process to form tooth shape and slot shape makes it possible to form teeth and slots in desired shapes with very high processing accuracy, for example, with an error of ±10 µm or less, preferably, ±5 µm or less.

When the error is represented by circularity, it should be 30 µm or less, preferably, 15 µm or less, more preferably, 10 µm or less. Circularity denotes the magnitude of deviation of a circle from a geometric circle, or the difference in radius obtained when a circle is sandwiched between two concentric geometric circles and the area between the circles is minimized.

The shape of a stator iron core and the shape of a rotor iron core having teeth and slots can also be simultaneously formed by etching process. In this case, the processing accuracy of etching process is high, and thus the gap between them can be reduced to 0.1 to 0.5 mm.

### (Silicon content and iron loss)

FIG. 6 illustrates the relationship between the silicon content and the iron loss of silicon steel sheets.

As illustrated in FIG. 4, a silicon steel sheet whose silicon content is 6.5% by weight is lowest in iron loss. However, when so much silicon as 6.5% by weight is contained in a silicon steel sheet, it is difficult to roll it and it is difficult to manufacture a silicon steel sheet having a desired thickness. This is because ease of rolling tends to be degraded with increase in silicon contained in the electromagnetic steel sheet. Against this backdrop, a silicon steel sheet containing 3.0% by weight of silicon is used with the balance between iron loss and ease of rolling taken into account.

In this embodiment, that is, the sheet thickness of a silicon steel sheet is reduced to reduce the iron loss of the silicon steel sheet and weaken the influence of the silicon content in the silicon steel sheet on iron loss.

Therefore, the silicon steel sheet described in relationship to this embodiment brings the following advantages: ease of rolling is enhanced; and the degree of freedom in the silicon content in a silicon steel sheet having great influence on iron loss is enhanced by reducing its sheet thickness. This makes it possible to set the silicon content in a silicon steel sheet to 0.5 to 7.0% by weight, to use extremely different contents, 0.8 to 2.0% by weight and 4.5 to 6.5% by weight, and to selectively use it according to the specifications of an iron core or the intended purpose of a commutator motor.

### (Etching shape)

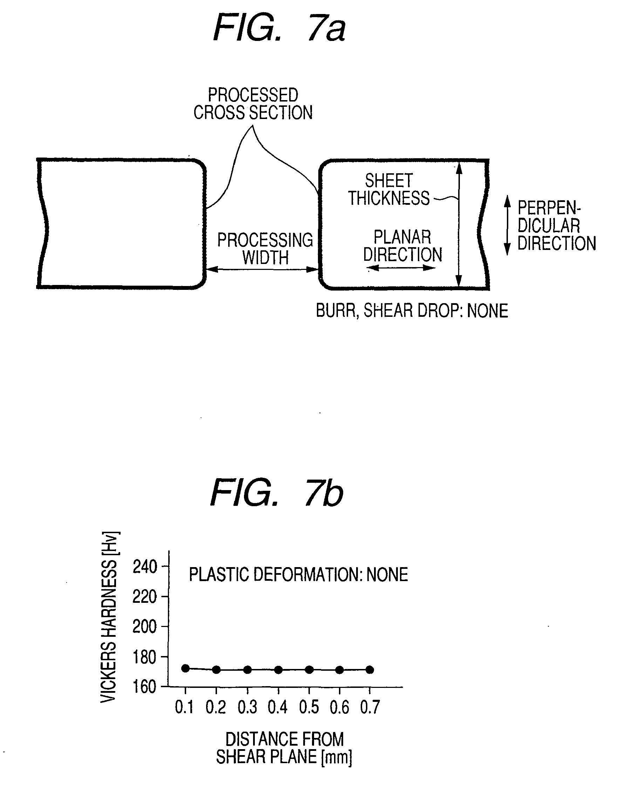

FIG. 7a is a schematic view of a typical cross-sectional shape obtained by etching process.

FIG. 7b is a graph showing the relationship between hardness of the steel sheet and a distance from the shear plane.

When a silicon steel sheet is processed by etching process, a plastic deformation layer, such as burr or the like, does not exist in proximity to the processed cross section dissolved in acid liquid, as illustrated under FIG. 7a. It is possible to form the processed cross section substantially perpendicularly to the plane of the silicon steel sheet. And change of hardness of steel sheet does not appear as shown in FIG. 7b.

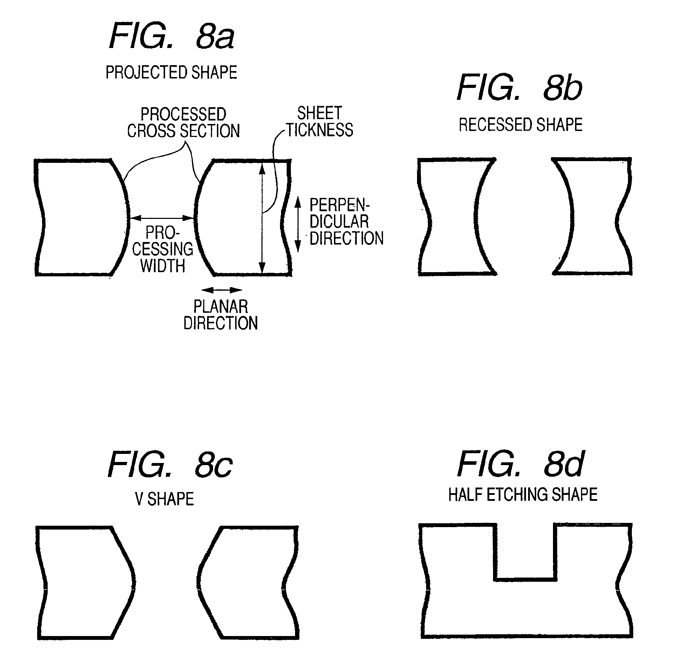

FIG. 8a, FIG. 8b, FIG. 8c and FIG. 8d illustrates the modified shapes of cross sections processed by advanced photo-etching process. The shape of dissolved portions can also be controlled as illustrated under FIG. 8a to FIG. 8c in the drawing. A half etching process shape with a dissolved portion partly left in the perpendicular direction can also be obtained as illustrated under FIG. 8d. That is, a desired taper can also be formed.

In a silicon steel sheet processed by etching process, as mentioned above, the residual stress arising from the processing is substantially zero, and a plastic deformation layer hardly exists. The amount of plastic deformation in the direction of the sheet thickness of the silicon steel sheet is substantially zero. Further, the amount of plastic deformation in proximity to a cross section processed by etching process is also substantially zero.

In addition, the shape of a processed cross section of a silicon steel sheet can be controlled at the processed cross section. It is possible to form the shape of a cut cross section in which the residual stress arising from the processing is substantially zero and the amount of plastic deformation in proximity to the processed cross section is also substantially zero.

Further, use of this etching process alsomakes it possible to apply the minute crystalline structure, mechanical characteristics, and surface portion of a silicon steel sheet to an iron core as are optimized. The optimization of the magnetic characteristics of the iron core can also be achieved in consideration of the anisotropy of the crystalline structure of a silicon steel sheet and the anisotropy of magnetic characteristics based thereon.

This embodiment in which etching process is applied solves the above problems of processing accuracy and eliminates degradation in accuracy with time.

When a predetermined pattern is used to expose a tooth shape and a slot shape to light, it is desirable to provide a mark or a datum hole with respect to the direction of rolling of the electromagnetic steel sheet.

When electromagnetic steel sheets are laminated, it is required that the electromagnetic steel sheets should be even in the direction of rolling for the enhancement of the characteristics of a commutator motor. For example, the magnetic characteristics of the commutator motor can be enhanced by taking the following measure: the positions of marks or datum holes B are varied by a predetermined amount in the direction of rolling; and when electromagnetic steel sheets are laminated, the marks or the datum holes B are aligned.

According to the invention, as mentioned above, an efficient and high-performance commutator motor so constructed that the following are implemented can be provided: torque is improved and armature counteractive magnetic flux is effectively reduced by ensuring a sufficient area occupied by field windings; and pulsating torque and iron loss due to punching process are reduced.

## Claims

1. A commutator motor comprising:
a stator (1) having a stator iron core (3) composed of laminating electromagnetic steel sheets and field windings (5, 6) wound on the main pole portions thereof; and
an armature (2) having an armature iron core (7) composed of laminating electromagnetic steel sheets, armature windings (10), a shaft (4), and a commutator, the commutator motor being so constructed that the armature windings are wound in slots in the armature iron core and both ends of each winding are connected to the commutator to give and receive electric power,
wherein the shapes of electromagnetic steel sheets composing the stator iron cores and the armature iron cores are formed by etching process.

2. The commutator motor of Claim 1,
wherein the thickness of the electromagnetic steel sheets is 0.05 to 0.30 mm.

3. The commutator motor of Claim 1,
wherein a plurality of through holes (B) formed by etching process are provided in the main pole portions of stator iron core positioned on the forward side in the direction of armature rotation.

4. The commutator motor of Claim 1,
wherein the steel sheet is an electromagnetic steel sheet so composed that the C content is 0.001 to 0.060% by weight, Mn is 0.1 to 0.6% by weight, P is 0.03% by weight or less, S is 0.03% by weight or less, Cr is 0.1% by weight or less, Al is 0.8% by weight or less, Si is 0.5 to 7.0% by weight, Cu is 0.01 to 0.20% by weight, and the remnant is composed of unavoidable impurities and Fe.

5. The commutator motor of Claim 1,
wherein the steel sheet is an electromagnetic steel sheet so composed that the C content is 0.002 to 0.020% by weight, Mn is 0.1 to 0.3% by weight, P is 0.02% by weight or less, S is 0.02% by weight or less, Cr is 0.05% by weight or less, Al is 0.5% by weight or less, Si is 0.8 to 6.5% by weight, Cu is 0.01 to 0.10% by weight, and the remnant is composed of unavoidable impurities and Fe.

6. The commutator motor of Claim 1,
wherein the steel sheet is a silicon steel sheet.

7. The commutator motor of Claim 6,
wherein the silicon content in the silicon steel sheets is 0.8 to 2.0% by weight.

8. The commutator motor of Claim 6,
wherein the silicon content in the silicon steel sheets is 4.5 to 6.5% by weight.

9. The commutator motor of Claim 6,
wherein the distribution of the silicon content in the silicon steel sheets is higher in the superficial portion than in the internal portion.

10. The commutator motor of Claim 1,
wherein the steel sheet contains crystal grains.

11. The commutator motor of Claim 1,
wherein the stator iron core and armature iron core have an insulating film, 0.01 to 0.2 µm in thickness, on the surface of each laminated steel sheets.

12. The commutator motor of Claim 10,
wherein the insulating film is an oxide film, 0.01 to 0.05 µm in thickness.

13. The commutator motor of Claim 1,
wherein the laminated iron core density of the electromagnetic steel sheets is 90.0 to 99.9%.

14. An electric vacuum cleaner equipped with the commutator motor of one of the claims 1 to 4.

15. A method for forming the iron core in a commutator motor having a stator iron core and an armature iron core made of steel sheets,
wherein the etching process is carried out by:
applying resist to the steel sheet; exposing each shape of the iron cores to light, developing the shapes and
removing the resist based on the shapes, processing the steel sheet by etchant, and after the processing by etchant, removing the remaining resist.
